# EUROPÄISCHE PATENTANMELDUNG

(11) **EP 1 089 545 A1**
(43) Veröffentlichungstag der Anmeldung: **04.04.2001**
(21) Anmeldenummer: 99119412.7
(22) Anmeldetag: 30.09.1999
(51) Int. Cl.: H04N 1/04

(54) **Beleuchtungszubehör für Flachbettscanner**

(71) Anmelder: Schruhl, Norbert, 21502 Geesthacht (DE)
(72) Erfinder: Schruhl, Norbert, 21502 Geesthacht (DE)

(57) **Zusammenfassung**

Herkömmliche Flachbettscanner können Dokumente, Texte und Fotos scannen, aber bei dreidimensionalen Objekten gibt es Probleme da sich der Deckel nicht schliessen lässt. Die Objekte werden nur einseitig von der Scannleuchte erhellt und das Umfeld ist dunkel. Bei der SCANBOX ist es anders, sie dunkelt den Raum über der Scannfläche ab und durch die drei Kaltlichtleuchten (die seitlich und oben angebracht sind) wird der Raum um dem Objekt so erhellt, das beim scannen der Eindruck von einem Foto entsteht das bei normalem Licht gemacht wurde. Durch die vorhandene Mittelplatte unter der oberen Leuchte kann man noch zusätzlich den Hintergrund verändern (farblich durch Folien oder Texte und Bilder, siehe Anlage).

## Beschreibung

Die Scanbox ist ein mit Beleuchtung versehener Kasten der das scannen von Objekten auf einem Flachbettscanner ermöglicht.Durch die Beleuchtung der Objekte erhält man ein Bild wie mit einer Fotokamera.
Der Vorteil ist, daß man nicht erst fotografieren muß, den Film entwickeln, und dann erst das Foto scannen kann, oder mit einer teuren Digitalkamera arbeiten muß.
Mit der Scanbox kann man direkt die gescannten Objekte im PC speichern ,bearbeiten ,katalogisieren und drucken, denn jeder Scanner hat ein Bildbearbeitungs-Programm
Die Scanbox paßt auf alle handelsüblichen Scanner.
Mann kann auch den Hintergrund der zu scannenden Objekte individuelle mit Folien ,Fotos oder Notizen anpassen.

### Handhabung:

Der Deckel des Scanners wird geöffnet und die Scanbox wird auf den Scanner gestellt,dann wird das zu scannende Objekt auf die Scheibe des Scanners gelegt und die Beleuchtung der Scanbox eingeschaltet.Jetzt kann das Objekt gescannt werden und ist sofort im PC.als Bild verfügbar.

Auf diese Erfindung und den Namen Scanbox erhebe ich Patentanspruch.

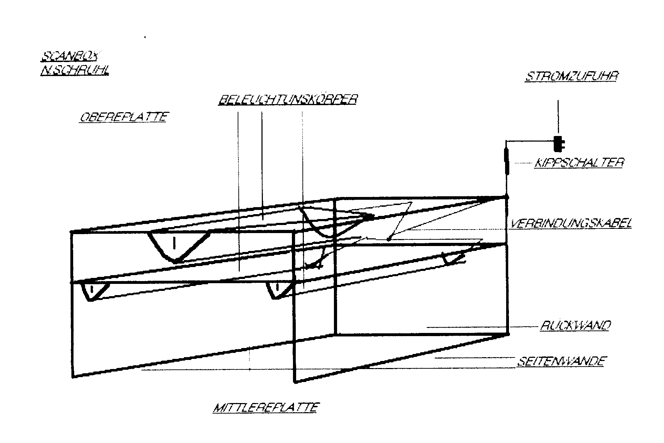

## Patentansprüche

1. Die Scanbox besteht aus leichten Kunststoffplatten die schwarz lackiert und zu einem Kasten verklebt sind. Bei einer Serienproduktion wäre es vorteilhaft den Kasten aus einem Stück zu formen und die Beleuchtungskörper an Schubschienen zu befestigen. Die Seitenteile sind 38cm lang und 18cm hoch. Die Rückseite ist 28cm lang und 18cm hoch. Die oberste Platte hat die Maße 38cm x 28cm. Die Mittelplatte hat die Maße 37,5cm x 27cm und dient als Auflage für den individuellen Hintergrund und als Halterung für die beiden seitlichen Beleuchtungskörper. Die oberste Platte dient als Halterung für den Hintergrund-Beleuchtungskörper. Damit die Farben der gescannten Objekte so natürlich wie möglich bleiben, sollten nur Kaltlichtröhren mit maximal 8 Watt Leistung verwendet werden.

2. Die Stromversorgung der Beleuchtung erfolgt über ein herkömmliches Kabel mit Kippschalter . Die Beleuchtungskörper haben je einen Schalter um die Objekte individuelle zu beleuchten.
